# EUROPÄISCHE PATENTSCHRIFT

(11) **EP 4 069 531 B1**
(45) Veröffentlichungstag und Bekanntmachung des Hinweises auf die Patenterteilung: **06.03.2024**
(21) Anmeldenummer: 20825149.6
(22) Anmeldetag: 07.12.2020
(51) Int. Cl.: B60G 5/04, B60G 21/04, B60G 9/02, B60G 9/00

(54) **FAHRZEUGKOMPONENTE FÜR EIN INSBESONDERE GELÄNDEGÄNGIGES NUTZFAHRZEUG**
VEHICLE COMPONENT FOR A COMMERCIAL VEHICLE, IN PARTICULAR AN OFF-ROAD VEHICLE
ÉLÉMENT DE VÉHICULE POUR UN VÉHICULE UTILITAIRE, EN PARTICULIER UN VÉHICULE TOUT-TERRAIN

(30) Priorität: 05.12.2019 DE 102019133138
(43) Veröffentlichungstag der Anmeldung: 12.10.2022
(73) Patentinhaber: General Dynamics European Land Systems - Mowag GmbH, 8280 Kreuzlingen (CH)
(72) Erfinder: KULCSAR, Jürgen, 78465 Konstanz (DE); SCHROETER, Jens, 8274 Tägerwilen (CH)
(74) Vertreter: BSB Patentanwälte Schütte & Engelen Partnerschaft mbB
(86) Internationale Anmeldenummer: PCT/EP2020/084800
(87) Internationale Veröffentlichungsnummer: WO 2021/111002

(56) Entgegenhaltungen:
- CH-A5- 663 767
- GB-A- 492 342
- GB-A- 2 342 902
- SE-B- 468 244
- US-A- 2 249 212
- US-A1- 2019 100 071
- US-B1- 8 801 011

## Beschreibung

Die vorliegende Erfindung betrifft eine Fahrzeugkomponente für ein insbesondere geländegängiges Nutzfahrzeug und ein Verfahren zum Betreiben einer Fahrzeugkomponente. Die Fahrzeugkomponente umfasst wenigstens ein Fahrgestell und wenigstens einen an dem Fahrgestell aufnehmbaren Triebstrang, welcher wenigstens zwei Starrachseinheiten mit jeweils wenigstens einem Schubrohrrahmen umfasst. Die Schubrohrrahmen sind mittels wenigstens einer am Fahrgestell befestigten Wankstabilisatoreinrichtung miteinander verbunden. Der Wankstabilisatoreinrichtung ist wenigstens eine Dämpfereinrichtung mit wenigstens einem Dämpferelement zur Dämpfung einer Wankbewegung des Fahrzeugs zugeordnet.

Ein derartiges Fahrzeug eignet sich besonders gut für das Fahren in schwierigstem Gelände und wird beispielsweise in der CH 663 767 A5 beschrieben. Dabei sind die starren Achsen mit jeweils einer Deichselvorrichtung zu einem trapezförmigen Schubrohrrahmen ausgebildet. Die Schubrohrrahmen sind an dem Fahrzeugrahmen bzw. Fahrgestell über entsprechende Lenker in einem Längs- und Querverbund sowie über die Wankstabilisatoreinrichtung angelenkt.

Aus der US 8 801 011 B1 ist ein Geländefahrzeug mit einem Fahrgestell mit einem Wankstabilisator mit zwei Waagbalken bekannt. Die Vorder- und die Hinterachse sind jeweils an die Waagbalken angebunden. Für die Anbindung der Hinterachse an die Waagbalken sind Dämpfer vorgesehen.

Die US 2019/100071 A1 zeigt ein Stabilisatorsystem für ein Fahrwerk mit einem Stabilisatorbügel und zwei elektronisch gesteuerten hydraulischen Dämpfern. Die Dämpfer koppeln jeweils ein Ende des Stabilisatorbügels an das Fahrgestell. Die Dämpfer können während der Fahrt unter Berücksichtigung von Sensorsignalen eingestellt werden.

Demgegenüber ist es die Aufgabe der vorliegenden Erfindung, die Fahreigenschaften eines solchen Fahrzeugs weiter zu verbessern. Insbesondere soll unter verschiedensten Einsatzbedingungen eine zuverlässige und zugleich unaufwendige bzw. störungsresistente Möglichkeit zur Erzielung einer optimalen Wankstabilität bereitgestellt werden.

Diese Aufgabe wird durch eine Fahrzeugkomponente mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrzeugkomponente ist für ein insbesondere geländegängiges Kraftfahrzeug und vorzugsweise Nutzfahrzeug vorgesehen. Die Fahrzeugkomponente umfasst wenigstens ein Fahrgestell und wenigstens einen an dem Fahrgestell aufnehmbaren Triebstrang. Der Triebstrang umfasst wenigstens zwei Starrachseinheiten mit jeweils wenigstens einem Schubrohrrahmen. Die Schubrohrrahmen der wenigstens zwei Starrachseinheiten sind mittels wenigstens einer am Fahrgestell befestigten Wankstabilisatoreinrichtung insbesondere gelenkartig miteinander verbunden. Der Wankstabilisatoreinrichtung ist wenigstens eine Dämpfereinrichtung mit wenigstens einem Dämpferelement insbesondere zur Dämpfung einer Wankbewegung des Fahrzeugs zugeordnet. Dabei umfasst das Dämpferelement wenigstens einen steuerbaren Dämpfer oder als ein solcher ausgebildet. Die Dämpfereinrichtung umfasst wenigstens eine Steuereinrichtung, welche dazu geeignet und ausgebildet ist, wenigstens einen Dämpferparameter des steuerbaren Dämpfers in Abhängigkeit wenigstens einer Kenngröße einzustellen. Vorzugsweise ist die Kenngröße sensorisch erfassbar und/oder hinterlegt (z. B. in der Steuereinrichtung als eine Dämpferkurve). Dabei sind wenigstens zwei wahlweise in wenigstens eine Aufnahmeeinrichtung der Dämpfereinrichtung einsetzbare und sich in wenigstens einer Dämpfungseigenschaft unterscheidende Dämpferelemente vorgesehen, sodass wenigstens ein Dämpferparameter der Dämpfereinrichtung durch die Wahl des Dämpferelements einstellbar ist.

Die erfindungsgemäße Fahrzeugkomponente bietet viele Vorteile. Einen erheblichen Vorteil bietet die gezielt angepasste Dämpfung in Abhängigkeit der Kenngröße. Ein weiterer Vorteil ist, dass die Dämpfereinrichtung der Wankstabilisatoreinrichtung zugeordnet ist. Die Dämpfung von Wankbewegungen erfolgt dadurch besonders gezielt und z. B. erheblich zuverlässiger, als bei einer herkömmlichen Dämpfung mittels Radstoßdämpfern oder Rahmenstoßdämpfern. Mit der hier vorgestellten Erfindung wird das Fahrverhalten daher erheblich verbessert und das Fahrzeug wird in Bezug auf Wankbewegungen nicht nur stabilisiert, sondern optimal gedämpft.

Vorzugsweise ist das Dämpferelement wenigstens teilweise an die Wankstabilisatoreinrichtung gekoppelt. Insbesondere ist dadurch wenigstens eine durch eine Wankbewegung des Fahrzeugs bedingte Bewegung wenigstens eines Teils der Wankstabilisatoreinrichtung mittels des Dämpferelements dämpfbar. Insbesondere ist das Dämpferelement wenigstens teilweise mittelbar und/oder unmittelbar an die Wankstabilisatoreinrichtung gekoppelt.

In einer besonders vorteilhaften Weiterbildung umfasst die (nachfolgend noch näher beschriebene) Wankstabilisatoreinrichtung wenigstens einen Waagbalken. Der Waagbalken ist insbesondere mit den Schubrohrrahmen gekoppelt. Der Waagbalken ist insbesondere über wenigstens ein Waagbalkenlager drehbar an dem Fahrgestell angebunden. Insbesondere ist das Dämpferelement (unmittelbar und/oder mittelbar) an den wenigstens einen Waagbalken gekoppelt ist. Insbesondere ist dadurch wenigstens eine Drehbewegung des Waagbalkens mittels des Dämpferelements dämpfbar. Es ist möglich und bevorzugt, dass das Dämpferelement in das Waagbalkenlager integriert ist.

Vorzugsweise umfasst die Wankstabilisatoreinrichtung wenigstens zwei Waagbalken. Dabei ist für die Waagbalken vorzugsweise jeweils wenigstens ein Dämpferelement vorgesehen ist. Insbesondere sind beide Waagbalken jeweils über wenigstens ein Waagbalkenlager drehbar an dem Fahrgestell angebunden.

In einer besonders vorteilhaften Weiterbildung ist vorgesehen, dass die Kenngröße eine Betriebsstellung der Wankstabilisatoreinrichtung relativ zu dem Fahrgestell und/oder relativ zu wenigstens einem der Schubrohrrahmen definiert. Insbesondere ist der Dämpferparameter in Abhängigkeit wenigstens einer solchen Kenngröße einstellbar.

In einer ebenfalls besonders vorteilhaften Weiterbildung ist vorgesehen, dass die Kenngröße eine Auslenkung des wenigstens einen Waagbalkens beschreibt. Insbesondere ist der Dämpferparameter in Abhängigkeit der Auslenkung einstellbar. Es ist bevorzugt, dass die Kenngröße wenigstens eine Drehwinkelstellung für jeweils einen Waagbalken und/oder einen Unterschied der Drehwinkelstellungen der Waagbalken zueinander definiert. Vorzugsweise ist für die Waagbalken jeweils ein separater Dämpferparameter (mittels jeweils eines Dämpferelements) einstellbar. Das ermöglicht eine besonders vorteilhafte Anpassung der Dämpfung an unterschiedlichste Anforderungen im Gelände und anderen Betriebssituationen.

Insbesondere definiert die Kenngröße wenigstens eine Drehwinkelstellung des wenigstens einen Waagbalkens definiert. Insbesondere ist die Sensoreinrichtung dazu geeignet und ausgebildet, mittels wenigstens einer (bzw. der nachfolgend beschriebenen) Sensoreinrichtung eine Drehwinkelstellung des Waagbalkens direkt und/oder mittelbar zu erfassen.

Besonders bevorzugt definiert die Kenngröße wenigstens eine Drehwinkelstellung für jeweils einen Waagbalken und/oder einen Unterschied der Drehwinkelstellungen der Waagbalken zueinander. Dabei umfasst die Wankstabilisatoreinrichtung insbesondere wenigstens zwei Waagbalken. Dabei ist für die Waagbalken jeweils wenigstens ein separater Dämpferparameter (mittels jeweils eines Dämpferelements) einstellbar.

In allen Ausgestaltungen ist bevorzugt, dass die Steuereinrichtung dazu geeignet und ausgebildet ist, die Kenngröße mittels wenigstens einer Sensoreinrichtung zu erfassen und vorzugsweise im Betrieb fortlaufend zu erfassen. Insbesondere ist die Sensoreinrichtung dazu geeignet und ausgebildet, wenigstens eine der zuvor beschriebenen Kenngrößen zu erfassen. Insbesondere ist mittels der Sensoreinrichtung wenigstens eine Relativbewegung zwischen wenigstens zwei sich bei einer Wankbewegung des Fahrzeugs wenigstens teilweise bewegenden Komponenten erfassbar. Dabei ist wenigstens eine der Komponenten mit der Wankstabilisatoreinrichtung gekoppelt oder wird durch diese bereitgestellt. Dazu umfasst die Sensoreinrichtung insbesondere wenigstens ein Sensormittel und z. B. wenigstens einen Wegsensor, Drehsensor bzw. Drehwinkelsensor, Abstandssensor oder dergleichen. Möglich sind auch andere geeignete Arten von Sensoren.

Besonders bevorzugt ist, dass die Sensoreinrichtung wenigstens einen Drehwinkelsensor zur Erfassung einer Drehwinkelstellung des Waagbalkens umfasst. Vorzugsweise ist für die Waagbalken jeweils wenigstens ein Drehwinkelsensor vorgesehen, sodass die Drehwinkelstellungen der Waagbalken insbesondere separat erfassbar sind. Vorzugsweise ist der Drehwinkelsensor mit dem Waagbalken gekoppelt. Insbesondere ist der Drehwinkelsensor mit einer durch das Waagbalkenlager verlaufenden Welle des Waagbalkens (drehfest) gekoppelt und/oder in das Waagbalkenlager integriert.

Insbesondere ist der steuerbare Dämpfer (bzw. das Dämpferelement mit dem steuerbaren Dämpfer) so ausgebildet, wie es nachfolgend für die wahlweise einsetzbaren Dämpferelemente beschrieben ist. Insbesondere wird der steuerbare Dämpfer durch eines der nachfolgend beschriebenen Dämpferelemente bereitgestellt.

Erfindungsgemäß umfasst die Fahrzeugkomponente wenigstens zwei wahlweise in wenigstens eine Aufnahmeeinrichtung der Dämpfereinrichtung einsetzbare Dämpferelemente. Dabei unterscheiden sich die Dämpferelemente in wenigstens einer Dämpfungseigenschaft, sodass wenigstens ein Dämpferparameter der Dämpfereinrichtung durch die Wahl des Dämpferelements einstellbar bzw. veränderbar ist.

Auch eine solche Fahrzeugkomponente bietet viele Vorteile. Einen erheblichen Vorteil bieten die wahlweise einsetzbaren Dämpferelemente mit ihren unterschiedlichen Dämpfungseigenschaften. Das ist eine sehr zuverlässige und zugleich konstruktiv unaufwendige Möglichkeit zur Anpassung der Dämpfereinrichtung an den Einsatzzweck des Fahrzeugs. Ein weiterer Vorteil ist, dass dadurch auch eine besonders robuste und störungsresistente Einstellung der Dämpferparameter ermöglicht wird.

Insbesondere umfasst die Wankstabilisatoreinrichtung wenigstens einen Waagbalken. Insbesondere ist der Waagbalken mit den Schubrohrrahmen gekoppelt und vorzugsweise gelenkartig bzw. um wenigstens eine Achse drehbar gekoppelt. Insbesondere ist der Waagbalken über wenigstens ein Waagbalkenlager drehbar an dem Fahrgestell angebunden. Insbesondere stellen die wahlweise einsetzbaren Dämpferelemente das Waagbalkenlager bereit oder sind wenigstens Teil eines solchen. Vorzugsweise sind die wahlweise einsetzbaren Dämpferelemente in das Waagbalkenlager integriert. Insbesondere ist wenigstens eines der Dämpferelemente dazu geeignet und ausgebildet, eine Drehbewegung des Waagbalkens zu dämpfen und insbesondere auch zu lagern. Dabei ist das Dämpferelement insbesondere als Drehdämpfer ausgebildet. Insbesondere entspricht dabei die Drehachse des Drehdämpfers der Drehachse des Waagbalkens. Insbesondere dämpft das Dämpferelement die Drehbewegung des Waagbalkens in wenigstens eine Drehrichtung und vorzugsweise in wenigstens zwei Drehrichtungen. Die Drehachse des Waagbalkens verläuft insbesondere quer zur Längsachse des Waagbalkens und vorzugsweise quer zu dessen Balkenarmen. Die Drehachse des Waagbalkens verläuft insbesondere quer zur Längsachse des Fahrgestells und insbesondere quer zur betriebsgemäßen Vorwärtsfahrtrichtung des Fahrzeugs. Alternativ oder zusätzlich zu einer solchen Ausgestaltung kann wenigstens eines der Dämpferelemente dazu geeignet und ausgebildet sein, eine Bewegung des Waagbalkens quer und insbesondere radial zu einer Drehachse des Waagbalkens zu dämpfen. Insbesondere kann wenigstens eines der Dämpferelemente als ein Kombinationsdämpfer ausgebildet sein, welcher sowohl eine eine Drehbewegung des Waagbalkens als auch eine Bewegung des Waagbalkens quer und insbesondere radial zu einer Drehachse des Waagbalkens dämpft.

Vorzugsweise unterscheiden sich die wahlweise einsetzbaren Dämpferelemente wenigstens in ihrer Elastizität und/oder Rückstellkraft und/oder Progression und/oder in ihrem Dämpfungsgrad bzw. Dämpfmaß. Es ist möglich, dass wenigstens eines der wahlweise einsetzbaren Dämpferelemente eine wenigstens zweistufige Progression und/oder Dämpfung aufweist. Möglich sind auch drei oder vier oder fünf oder mehr Stufen.

Vorzugsweise unterscheiden sich die wahlweise einsetzbaren Dämpferelemente wenigstens in einer Eigenschaft wenigstens eines Elastomerbauteils. Das bietet einer besonders wirkungsvolle und zugleich unaufwendig umsetzbare Einstellung von Dämpferparameter. Dabei betrifft die Eigenschaft vorzugsweise eine Shorehärte und/oder eine Zusammensetzung und/oder eine Masse des Elastomerbauteils. Die Elastomerbauteile können sich auch in einer anderen Werkstoffkenngröße unterscheiden. Möglich ist auch, dass sich die Dämpferelemente in der Anzahl ihrer Elastomerbauteile unterscheiden. Solche Ausgestaltungen betreffen vorzugsweise Elastomerbauteile in einer Dämpferbuchse und insbesondere in einer Elastomer-Metall-Buchse. Als Werkstoff für das Elastomerbauteil kann beispielsweise Gummi, Kautschuk, Kunststoff oder dergleichen dienen. Das Elastomerbauteil ist dabei insbesondere wie die nachfolgend beschriebene Elastomerlage oder das Elastomer ausgebildet.

Bevorzugt ist, dass sich die wahlweise einsetzbaren Dämpferelemente wenigstens in ihrer Dämpferbauart unterscheiden. Insbesondere sind die unterschiedlichen Dämpferbauarten dabei aus einer Gruppe von Dämpferbauarten entnommen, wenigstens umfassend: Drehdämpfer, Lineardämpfer, Dämpferbuchse, Schlitzbuchse, Elastomerdämpfer, einstufiger Dämpfer, zweistufiger Dämpfer, mehrstufiger Dämpfer, hydraulischer Dämpfer, Hydrolager, elektro- oder magnetorheologischer Dämpfer, aktiver bzw. regelbarer Dämpfer. Unter einem Lineardämpfer wird im Rahmen der vorliegenden Erfindung insbesondere ein in linearer Richtung wirkender Dämpfer verstanden. Die Bezeichnung Lineardämpfer wird im Rahmen der vorliegenden Erfindung insbesondere nicht auf einen linearen Verlauf der Dämpfungskraft bezogen. Die zuvor beschriebenen Dämpfer sind vorzugsweise als steuerbare Dämpfer ausgebildet, sodass die Dämpfung gezielt einstellbar ist.

Wenigstens eines der Dämpferelemente umfasst vorzugsweise wenigstens eine Dämpferbuchse, insbesondere Drehdämpferbuchse, oder ist als eine solche ausgebildet. Die Dämpferbuchse umfasst insbesondere wenigstens eine konzentrisch zwischen wenigstens zwei Stützlagen angeordnete Elastomerlage. Insbesondere sind wenigstens eine äußere Stützlage und wenigstens eine innere Stützlage vorgesehen. Zwischen der inneren und der äußeren Stützlage können weitere Stützlagen angeordnet sein. Dann kann zwischen den Stützlagen jeweils wenigstens eine Elastomerlage angeordnet sein. Die Dämpferbuchse kann wenigstens zwei oder wenigstens drei oder mehr Elastomerlage aufweisen. Die Dämpferbuchse kann auch zur Federung dienen.

Vorzugsweise sind wenigstens eine äußere Stützlage und insbesondere die äußerste Stützlage und/oder wenigstens eine Elastomerlage wenigstens teilweise geschlitzt. Insbesondere ist die Dämpferbuchse als eine Schlitzbuchse ausgebildet. Insbesondere umfasst die Dämpferbuchse wenigstens einen Schlitz, welcher sich vorzugsweise nach radial innen verjüngt. Insbesondere ist eine innerste Stützlage nicht geschlitzt ausgeführt. Insbesondere verläuft der Schlitz axial. Die Stützlage kann aus einem Metallwerkstoff oder einem Kunststoff oder einem Verbundwerkstoff oder einem anderen geeigneten Werkstoff gefertigt sein.

Es ist möglich, dass das Dämpferelement, z. B. die Dämpferbuchse, nur die Bewegung des Waagbalkens quer und insbesondere radial zu einer Drehachse des Waagbalkens dämpft. Dann wird der benötigte rotative Freiheitsgrad für die Drehbarkeit des Waagbalkens insbesondere durch wenigstens eine Lagereinheit, z. B. Gleitlager und/oder Wälzlager, erreicht. Insbesondere ist dazu zwischen dem Schubrohrrahmen, beispielsweise an einem rahmenfesten Zapfen des Schubrohrrahmens, und dem am Waagbalken befestigten Dämpferelement eine solche Lagereinheit angeordnet. Es kann aber auch vorgesehen sein, dass das Dämpferelement auch den rotativen Freiheitsgrad für die Drehbarkeit des Waagbalkens bereitstellt. Insbesondere ist das Dämpferelement dann (auch) als Drehdämpfer ausgebildet. Die Rotation bzw. Lagerung findet dann also im Dämpferelement statt.

Insbesondere umfassen die wahlweise einsetzbaren Dämpferelemente wenigstens zwei sich in wenigstens einer Dämpfungseigenschaft unterscheidende Dämpferbuchsen. Dabei sind die Dämpferbuchsen vorzugsweise wie zuvor beschrieben ausgebildet. Dabei unterscheiden sich die Dämpferbuchsen insbesondere in Bezug auf ihre Elastomerlage und/oder Stützlage. Beispielsweise ist die Anzahl und/oder Zusammensetzung der Stützlage und/oder der Elastomerlage unterschiedlich. Vorzugsweise unterscheiden sich die Dämpferbuchsen in einer Shorehärte und/oder im Dämpfungsgrad ihrer wenigstens einen Elastomerlage. Möglich ist, dass die Dämpferbuchsen unterschiedlich geschlitzt ausgeführt sind.

In einer bevorzugten Ausgestaltung umfasst wenigstens eines der Dämpferelemente wenigstens eine wenigstens zweistufige Dämpferbuchse oder ist als eine solche ausgebildet. Möglich ist auch eine mehrstufige und beispielsweise dreistufige oder vierstufige Dämpferbuchse. So können die Dämpfungseigenschaften besonders gezielt angepasst werden. Die Dämpferbuchse ist dabei insbesondere in wenigstens einem ersten Drehwinkelbereich mittels wenigstens eines weicheren Elastomers gedämpft. Insbesondere ist die Dämpferbuchse in wenigstens einem auf den ersten Drehwinkelbereich folgenden zweiten Drehwinkelbereich wenigstens mittels wenigstens eines härteren Elastomers gedämpft. Alternativ oder zusätzlich kann die zweistufige Dämpferbuchse dazu geeignet und ausgebildet sein, eine Bewegung des Waagbalkens quer und insbesondere radial zu einer Drehachse des Waagbalkens zu dämpfen.

Insbesondere stellt das härtere Elastomer einen Anschlag für die Drehbewegung bereit. Der Anschlag wird insbesondere am Ende des ersten Drehwinkelbereichs erreicht. Insbesondere folgt nach Erreichen des Anschlags der zweite Drehwinkelbereich. Insbesondere tritt im zweiten Drehwinkelbereich eine Verformung des Anschlags auf. Insbesondere erfolgt im ersten Drehwinkelbereich eine Verformung des weicheren Elastomers bis zu einem Auftreffen auf das härtere Elastomer. In einer mehrstufigen Ausführung umfasst die Dämpferbuchse vorzugsweise wenigstens drei unterschiedlich harte Elastomere. Insbesondere ist am Ende eines jeden Drehwinkelbereichs ein Elastomer als Anschlag vorgesehen. Insbesondere sind die Elastomere zwischen wenigstens zwei Tragkörpern angeordnet. Insbesondere dient ein Tragkörper zur Befestigung an dem Waagbalken und der andere Tragkörper zur Befestigung an dem Fahrgestell.

Die wahlweise einsetzbaren Dämpferelemente umfassen insbesondere wenigstens zwei sich in wenigstens einer Dämpfungseigenschaft unterscheidende wenigstens zweistufige Dämpferbuchsen. Dabei sind die Dämpferbuchsen insbesondere wie zuvor beschrieben ausgebildet. Möglich ist, dass sich die Dämpferbuchsen in der Anzahl ihrer Stufen unterscheiden. Beispielsweise sind eine einstufige und eine wenigstens zweistufige Dämpferbuchse vorgesehen.

Es ist möglich und bevorzugt, dass wenigstens eines der Dämpferelemente wenigstens eine hydraulisch gedämpfte Dämpferbuchse umfasst oder als eine solche ausgebildet ist. Eine solche Dämpferbuchse umfasst insbesondere wenigstens zwei durch wenigstens eine Ventileinrichtung verbundene Dämpferkammern. Insbesondere steuert die Ventileinrichtung einen Durchfluss eines Dämpferfluids von der einen zur anderen Dämpferkammer. Es ist möglich, dass die hydraulisch gedämpfte Dämpferbuchse einstellbar ausgebildet ist. Insbesondere sind die Dämpferkraft und/oder unterschiedliche Dämpfungskurven einstellbar.

Das Dämpferfluid kann als ein elektrorheologisches und/oder magnetorheologisches Fluid ausgebildet sein. Dann wird unter der hydraulischen Dämpferbuchse insbesondere eine elektrorheologische bzw. magnetorheologische Dämpferbuchse verstanden. Die Ventileinrichtung umfasst dann insbesondere wenigstens eine elektrische Spule und/oder wenigstens einen Magneten. In allen Ausgestaltungen kann die Ventileinrichtung elektrisch und/oder elektromagnetisch und/oder elektromechanisch ausgebildet sein.

Insbesondere ist die hydraulisch gedämpfte Dämpferbuchse mittels wenigstens einer Federeinrichtung und vorzugsweise wenigstens eines Elastomers rückstellbar. Die Federeinrichtung kann wenigstens eine Gasdruckfeder und/oder Luftfeder und/oder Torsionsfeder und/oder Biegefeder und/oder Metallfeder oder dergleichen umfassen. Das ermöglicht eine unaufwendige und zugleich zuverlässige Rückstellung des hydraulischen Dämpfers.

Insbesondere ist die hydraulisch gedämpfte Dämpferbuchse als ein Drehdämpfer und/oder als ein Lineardämpfer ausgebildet. Es ist möglich, dass die hydraulisch gedämpfte Dämpferbuchse durch einen Kombinationsdämpfer bereit gestellt wird. Der Kombinationsdämpfer ist insbesondere dazu geeignet und ausgebildet, sowohl eine Drehbewegung des Waagbalkens rotativ zu dämpfen als auch eine Bewegung des Waagbalkens quer und insbesondere radial zu einer Drehachse des Waagbalkens zu dämpfen. Der Kombinationsdämpfer kann wenigstens einen (hydraulischen) Drehdämpfer umfassen, welcher mit wenigstens einem radial wirkenden (hydraulischen) Lineardämpfer wirkverbunden ist. Solche Dämpfer bieten erhebliche Vorteile in bestimmten Fahrsituationen. Dabei ist der Dämpfer vorzugsweise als steuerbarer Dämpfer ausgebildet, sodass die Dämpfung gezielt einstellbar ist.

Insbesondere umfassen die wahlweise einsetzbaren Dämpferelemente wenigstens zwei sich in wenigstens einer Dämpfungseigenschaft unterscheidende hydraulisch gedämpfte Dämpferbuchsen. Insbesondere sind die Dämpferbuchsen dabei wie zuvor beschrieben ausgebildet.

In einer vorteilhaften Weiterbildung ist wenigstens eines der Dämpferelemente als wenigstens ein steuerbarer Dämpfer ausgebildet oder umfasst wenigstens einen solchen. Dabei umfasst die Dämpfereinrichtung vorzugsweise wenigstens eine Steuereinrichtung, welche dazu geeignet und ausgebildet ist, wenigstens einen Dämpferparameter der steuerbaren Dämpfer anzupassen. Insbesondere ist der Dämpferparameter während der Fahrt anpassbar. Ein steuerbarer Dämpfer bietet allein und besonders in Kombination den wahlweise einsetzbaren Dämpferelementen eine erhebliche Verbesserung der Fahreigenschaften und eine besonders vorteilhafte Anpassung der Dämpfereinrichtung. Die Steuereinrichtung kann auch dazu geeignet und ausgebildet sein, wenigstens einen Parameter der Federung des steuerbaren Dämpfers anzupassen.

Die Steuereinrichtung ist vorzugsweise dazu geeignet und ausgebildet, den wenigstens einen Dämpferparameter in Abhängigkeit wenigstens einer hinterlegten und/oder sensorisch erfassbaren bzw. erfassten Kenngröße einzustellen. Das bietet eine besonders gezielte und individuelle Anpassung der Dämpfung. Insbesondere ist die Steuereinrichtung dazu geeignet und ausgebildet, in Abhängigkeit der Kenngröße eine Wankbewegung des Fahrzeugs zu reduzieren oder zu verhindern. Die Kenngröße kann beispielsweise eine Zustandsgröße der Wankstabilisatoreinrichtung sein und z. B. eine Auslenkung des Waagbalkens beschreiben. Die Kenngröße kann auch eine andere Zustandsgröße für das Fahrwerk und/oder einen Beladungszustand des Fahrzeugs betreffen und/oder das Gelände charakterisieren. Die hinterlegte Kenngröße kann durch wenigstens einen Algorithmus bereitgestellt werden. Es ist möglich, dass die Kenngröße anhand wenigstens eines Algorithmus anpassbar ist. Dazu kann vorgesehen sein, dass der Algorithmus eine Benutzereingabe und/oder eine sonstige Vorgabe berücksichtigt.

Für das sensorische Erfassen der Kenngröße ist insbesondere wenigstens eine Sensoreinrichtung vorgesehen. Die Sensoreinrichtung ist insbesondere dazu geeignet und ausgebildet, wenigstens eine charakteristische Größe für ein Fahrmanöver und/oder für einen Zustand der Wankstabilisatoreinrichtung zu erfassen. Insbesondere ist mittels der Sensoreinrichtung eine Winkelstellung des Waagbalkens und vorzugsweise ein Drehwinkel des Waagbalkens unmittelbar oder mittelbar erfassbar.

Beispielsweise umfasst die Sensoreinrichtung wenigstens einen Drehwinkelsensor zur unmittelbaren Erfassung des Drehwinkels der Drehachse des Waagbalkens. Für eine mittelbare Erfassung kann der Sensoreinrichtung eine Getriebeeinrichtung zugeordnet sein, welche eine Drehbewegung des Waagbalkens in eine lineare Bewegung umsetzt. Wenn die Wankstabilisatoreinrichtung wenigstens zwei Waagbalken umfasst, kann der Drehwinkel für jeden Waagbalken separat erfasst werden. Dabei ist der Dämpferparameter für den Dämpfer in Abhängigkeit des Drehwinkels desjenigen Waagbalkens einstellbar, zu dessen Dämpfung er dient.

Es ist möglich, dass der steuerbare Dämpfer hydraulisch ausgebildet ist. Insbesondere umfasst der steuerbare Dämpfer wenigstens zwei Dämpferkammern. Insbesondere umfasst der steuerbare Dämpfer wenigstens eine die Dämpferkammern strömungstechnisch verbindende Ventileinrichtung. Insbesondere ist der wenigstens eine Dämpferparameter durch Ansteuern der Ventileinrichtung einstellbar. Insbesondere steuert die Ventileinrichtung einen Durchfluss eines Dämpferfluids von der einen in die andere Dämpferkammer. Vorzugsweise ist der steuerbare hydraulische Dämpfer wie die zuvor beschriebene hydraulisch gedämpfte Dämpferbuchse ausgebildet oder umfasst wenigstens einen solchen.

Der steuerbare hydraulische Dämpfer kann auch durch den zuvor beschriebenen Kombinationsdämpfer bereitgestellt werden. Insbesondere ist Steuereinrichtung dazu geeignet und ausgebildet ist, wenigstens einen Dämpferparameter für die Dämpfung der Drehbewegung des Waagbalkens und wenigstens einen Dämpferparameter für die Bewegung des Waagbalkens quer und insbesondere radial zu einer Drehachse des Waagbalkens separat und vorzugsweise unabhängig voneinander einzustellen. Möglich ist auch, dass eine abhängige Einstellung der Dämpferparameter vorgesehen ist. Es hat sich für bestimmte Fahrsituationen gezeigt, dass eine Beeinflussung der radialen Dämpfung bzw. (Feder-) Steifigkeit in Kombination mit einer rotativen Dämpfung erhebliche Vorteile mit sich bringt.

Die Anmelderin behält sich vor, ein Verfahren zu beanspruchen, welches zum Betreiben einer Fahrzeugkomponente dient, welche wenigstens ein Fahrgestell und wenigstens einen an dem Fahrgestell aufnehmbaren Triebstrang umfasst. Der Triebstrang umfasst wenigstens zwei Starrachseinheiten mit jeweils wenigstens einem Schubrohrrahmen. Die Schubrohrrahmen der wenigstens zwei Starrachseinheiten sind mittels wenigstens einer am Fahrgestell befestigten Wankstabilisatoreinrichtung insbesondere gelenkartig miteinander verbunden. Der Wankstabilisatoreinrichtung ist wenigstens eine Dämpfereinrichtung insbesondere zur Dämpfung einer Wankbewegung des Fahrzeugs zugeordnet. Dabei wird zur Anpassung der Wankstabilität an eine Ausstattung mit Anbaugeräten und/oder an einen Beladungszustand des Nutzfahrzeugs und/oder an ein zu durchfahrendes Geländeprofil und/oder an wenigstens einen Einsatzzweck des Nutzfahrzeugs wenigstens eines von wenigstens zwei in wenigstens eine Aufnahmeeinrichtung der Dämpfereinrichtung einsetzbaren Dämpferelementen ausgewählt. Das ausgewählte Dämpferelement wird dann in die Aufnahmeeinrichtung eingesetzt.

Auch ein solches Verfahren bietet eine erhebliche Verbesserung der Wankstabilität des Nutzfahrzeugs. Die einsetzbaren Dämpferelemente sind vorzugsweise wie zuvor für die erfindungsgemäße Fahrzeugkomponente beschrieben ausgebildet. Insbesondere wird mit dem Verfahren die zuvor beschriebene Fahrzeugkomponente betrieben. Insbesondere ist die zuvor beschriebene Fahrzeugkomponente dazu geeignet und ausgebildet, nach dem erfindungsgemäßen Verfahren betrieben zu werden.

In einer besonders bevorzugten Ausgestaltung umfasst die Wankstabilisatoreinrichtung wenigstens zwei Waagbalken. Insbesondere sind die Waagbalken dabei um eine gemeinsame (gedachte) Drehachse drehbar. Insbesondere sind die Waagbalken auf gegenüberliegenden Längsseiten des Fahrgestells angeordnet. Insbesondere sind die Waagbalken jeweils an zwei Schubrohrrahmen gekoppelt. Insbesondere sind die Waagbalken jeweils an einen Schubrohrrahmen wenigstens einer Vorderachseinheit und zugleich an einen Schubrohrrahmen wenigstens einer Hinterachseinheit gekoppelt.

Insbesondere ist für die wenigstens zwei Waagbalken jeweils wenigstens ein Waagbalkenlager vorgesehen. Insbesondere ist jeder Waagbalken mittels wenigstens eines eigenen Waagbalkenlagers an das Fahrgestell drehbar angebunden. In allen Ausgestaltungen ist es besonders bevorzugt, dass die Waagbalken wenigstens teilweise unabhängig voneinander drehbar sind. Insbesondere sind die wenigsten zwei Waagbalken nicht über eine Welle oder dergleichen miteinander drehfest verbunden.

Insbesondere sind für die Waagbalken jeweils wenigstens zwei wahlweise einsetzbare und sich in wenigstens einer Dämpfungseigenschaft unterscheidende Dämpferelemente vorgesehen. Insbesondere umfassen die wahlweise einsetzbaren Dämpferelemente dabei für die wenigstens zwei Waagbalken ein Paar bzw. eine Gruppe von Dämpferelementen mit identischen Dämpfungseigenschaften. Dadurch können alle vorgesehenen Waagbalken der Wankstabilisatoreinrichtung mit gleichartigen bzw. identischen Dämpferelementen ausgestattet werden.

Insbesondere umfasst der Waagbalken wenigstens zwei sich von dem Waagbalkenlager aus erstreckende Balkenarme. Insbesondere weisen die Waagbalken jeweils wenigstens zwei Balkenarme auf, wobei die Waagbalken mit jeweils einem Balkenarmen an einem gemeinsamen Schubrohrrahmen gekoppelt sind. Die Waagbalken sind mit jeweils einem Balkenarm an einem gemeinsamen Schubrohrrahmen gekoppelt.

An den Balkenarmen ist jeweils wenigstens ein Koppelpunkt zur gelenkartigen Anbindung des Schubrohrrahmens insbesondere mittels wenigstens einer Schubstange angeordnet. Insbesondere ist an den Schubrohrrahmen jeweils wenigstens ein Koppelpunkt zur gelenkartigen Anbindung der Schubstange.

Der Schubrohrrahmen stellt insbesondere einen Achskörper der Starrachseinheit dar und ist vorzugsweise als Deichsel bzw. deichselartig ausgeführt. Der Schubrohrrahmen ist insbesondere in der Art einer Deichsel bewegbar an das Fahrgestell angebunden. Insbesondere sind die Schubrohrrahmen über jeweils wenigstens eine Gelenkeinrichtung, hier als Zentralgelenk bezeichnet, bewegbar an dem Fahrgestell befestigt. Dabei können die Zentralgelenke als Kugelgelenke und/oder Kugelflächengelenke und/oder Gummipuffer oder dergleichen ausgeführt sein. Dabei sind die Zentralgelenke vorzugsweise an einem Querrohr des Schubrohrrahmens angebunden. Die Gelenkeinrichtung dient insbesondere zur Längsführung des Schubrohrrahmens bzw. der Deichsel. Insbesondere umfasst der Triebstrang wenigstens zwei antreibbare Starrachseinheiten.

Durch das Zentralgelenk werden vorzugsweise im Wesentlichen Längskräfte aufgenommen und insbesondere unter Gewährleistung der Achsbewegungen Einfedern (Rotation um y-Achse des Fahrzeugkoordinatensystems) und Verschränken (Rotation um x-Achse). Zur Querführung der Schubrohrrahmen bzw. der Deichseln umfassen die Starrachseinheiten vorzugsweise jeweils wenigstens eine Querführungseinrichtung. Die Querführungseinrichtung umfasst insbesondere wenigstens eine Gestängeeinrichtung, welche über Gelenke ebenfalls mit dem Fahrgestell bzw. Aufbau verbunden ist. Die Querführungseinrichtung kann wenigstens einen Panhardstab und/oder Wattgestänge und/oder wenigstens eine Scherenführung umfassen oder derart ausgebildet sein.

Vorzugsweise sind die zuvor beschriebenen Starrachseinheiten sowohl für die Vorderachseinheit als auch für die Hinterachseinheit vorgesehen. Miteinander verbunden sind die Starrachseinheiten vorzugsweise über wenigstens einen schwenkbaren Waagbalken der Wankstabilisatoreinrichtung. Der Waagbalken ist insbesondere drehbar an dem Fahrgestell angebunden. Die Starrachseinheiten sind insbesondere über jeweils wenigstens ein Gelenk bzw. gelenkartig mit dem Waagbalken verbunden.

In allen Ausgestaltungen ist es bevorzugt, dass die Starrachseinheiten als De-Dion-Achsen ausgebildet sind oder wenigstens eine solche umfassen. Möglich ist auch, dass wenigstens eine der Starrachseinheiten als De-Dion-Achse ausgebildet ist oder wenigstens eine solche umfasst. Insbesondere sind die zum Antrieb des Fahrzeugs vorgesehenen Getriebekomponenten und beispielsweise ein Ausgleichsgetriebe außerhalb der Schubrohrrahmen angeordnet. Dadurch können ungefederte bzw. ungedämpfte Massen besonders vorteilhaft verringert werden. Bevorzugt ist eine zum Antreiben der jeweiligen Starrachseinheit dienende und insbesondere mit einer Getriebeeinrichtung wirkverbundene Antriebsverbindung außerhalb des Schubrohrrahmens bzw. eines Achsrohrs angeordnet. Die Starrachseinheiten umfassen insbesondere jeweils wenigstens eine Starrachse. Es ist aber auch möglich, dass die Starrachseinheiten als Halbstarrachsen ausgebildet sind oder wenigstens eine solche umfassen, beispielsweise eine Verbundlenkerachse oder dergleichen.

Vorzugsweise weisen die Starrachseinheiten jeweils wenigstens ein Ausgleichsgetriebe auf. Dabei sind die Ausgleichsgetriebe vorzugsweise außerhalb der Schubrohrrahmen angeordnet. Es können auch andere Antriebsverbindungen außerhalb des Schubrohrrahmens angeordnet sein. Das Ausgleichsgetriebe kann auch als Achs-Differenzial bezeichnet werden.

Der Triebstrang umfasst insbesondere wenigstens eine Getriebeeinrichtung mit wenigstens einem Hauptgetriebe und/oder mit wenigstens einem Verteilergetriebe. Insbesondere stellt die Getriebeeinrichtung für jede antreibbare Starrachseinheit jeweils wenigstens ein Ausgleichsgetriebe bzw. Differenzialgetriebe bereit. Das Ausgleichsgetriebe bzw. Differenzialgetriebe ist insbesondere wenigstens teilweise oder vollständig sperrbar. Das Ausgleichsgetriebe bzw. Differenzialgetriebe kann auch gar nicht sperrbar bzw. offen ausgebildet sein. Das Verteilergetriebe kann auch wenigstens ein Ausgleichsgetriebe umfassen, welches insbesondere wenigstens teilweise oder vollständig oder gar nicht sperrbar ist. Das Hauptgetriebe kann als ein manuelles oder ein teilautomatisches oder ein vollautomatisches Getriebe ausgebildet sein. Das Hauptgetriebe umfasst insbesondere ein Schaltgetriebe oder ist als ein solches ausgebildet. Der Triebstrang kann wenigstens ein Rad umfassen. Das Hauptgetriebe und/oder das Verteilergetriebe und/oder das Ausgleichsgetriebe sind insbesondere rahmenfest angeordnet.

Insbesondere ist der Wankstabilisatoreinrichtung wenigstens eine Federeinrichtung zugeordnet, welche dazu geeignet und ausgebildet ist, eine Drehbewegung des Waagbalkens unmittelbar und/oder mittelbar abzustützen. Beispielsweise ist eine rotative Abstützung möglich. Möglich ist auch, dass die Federeinrichtung über wenigstens eine Getriebeeinrichtung an den Waagbalken gekoppelt ist, wobei die Getriebeeinrichtung eine Drehbewegung des Waagbalkens in eine lineare Bewegung für die Federeinrichtung umsetzt. Insbesondere umfasst die Federeinrichtung wenigstens eine Feder. Unter einer Federeinrichtung werden insbesondere Federn und auch andere geeignete Arten von Kraftspeichern verstanden.

Insbesondere sind die wahlweise einsetzbaren Dämpferelemente dazu geeignet und ausgebildet, wahlweise in dieselbe Aufnahmeeinrichtung eingesetzt zu werden. Insbesondere weisen die wahlweise einsetzbaren Dämpferelemente gleiche Einbaumaße und/oder gleiche Einbauvorrichtungen in Bezug auf den Einbau in die Aufnahmeeinrichtung auf. Es ist möglich, dass die Dämpferelemente jeweils wenigstens eine Federeinrichtung umfassen oder durch eine solche bereitgestellt werden. Insbesondere sind die Dämpferelemente dazu geeignet und ausgebildet, sowohl zu dämpfen als auch zu federn.

Insbesondere umfassen die Dämpferelemente jeweils wenigstens zwei relativ zueinander bewegbare Dämpferteile. Insbesondere ist wenigstens ein erstes Dämpferteil mit dem Fahrgestell wirkverbunden. Dabei kann das erste Dämpferteil unmittelbar mit dem Fahrgestell und/oder mittelbar über die Wankstabilisatoreinrichtung mit dem Fahrgestell gekoppelt sein. Insbesondere ist wenigstens ein zweites Dämpferteil mit wenigstens einem der Schubrohrrahmen wirkverbunden. Dabei kann das zweite Dämpferteil unmittelbar mit dem Schubrohrrahmen und/oder mittelbar über die Wankstabilisatoreinrichtung mit dem Schubrohrrahmen gekoppelt sein. Dabei ist die Bewegung der beiden Dämpferteile dämpfbar.

Es ist möglich und bevorzugt, dass die Dämpferelemente jeweils wenigstens einen Drehdämpfer umfassen oder als ein solcher ausgebildet sind. Die Dämpferelemente können auch jeweils wenigstens einen Lineardämpfer umfassen oder als ein solcher ausgebildet sein. Dann ist insbesondere wenigstens eine Getriebeeinrichtung vorgesehen, welche die Drehbewegung des Waagbalkens in eine für den Dämpfer geeignete Bewegung umsetzt.

Eine andere erfindungsgemäße Fahrzeugkomponente umfasst wenigstens ein Fahrgestell und wenigstens einen an dem Fahrgestell aufnehmbaren Triebstrang. Der Triebstrang umfasst wenigstens zwei Starrachseinheiten mit jeweils wenigstens einem Schubrohrrahmen. Die Schubrohrrahmen der wenigstens zwei Starrachseinheiten sind mittels wenigstens einer am Fahrgestell befestigten Wankstabilisatoreinrichtung insbesondere gelenkartig miteinander verbunden. Der Wankstabilisatoreinrichtung ist wenigstens eine Dämpfereinrichtung insbesondere zur Dämpfung einer Wankbewegung des Fahrzeugs zugeordnet. Dabei umfasst die Dämpfereinrichtung wenigstens einen steuerbaren Dämpfer. Insbesondere umfasst die Dämpfereinrichtung wenigstens eine Steuereinrichtung, welche dazu geeignet und ausgebildet ist, wenigstens einen Dämpferparameter des steuerbaren Dämpfers insbesondere im laufenden Betrieb (insbesondere während eines Fahrbetriebs des Fahrzeugs insbesondere fortwährend anzupassen.

In bevorzugten Weiterbildungen ist der steuerbare Dämpfer dabei ausgebildet, wie zuvor für die erfindungsgemäße Fahrzeugkomponente beschrieben. Vorzugsweise ist der steuerbare Dämpfer wie zuvor beschrieben mittels der Steuereinrichtung ansteuerbar. Auch eine solche Fahrzeugkomponente bietet eine erhebliche Verbesserung der Fahreigenschaften und viele Vorteile bei der Einstellung der Dämpfung.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Figur 1: eine rein schematische Darstellung eines Nutzfahrzeugs mit einer erfindungsgemäßen Fahrzeugkomponente in einer perspektivischen Ansicht von schräg oben;
- Figur 2: eine rein schematische Detaildarstellung der Fahrzeugkomponente der Fig. 1;
- Figur 3: eine rein schematische Darstellung eines Dämpferelements der Fahrzeugkomponente in einer Seitenansicht;
- Figur 4: eine rein schematische Darstellung eines weiteren Dämpferelements der Fahrzeugkomponente in einer perspektivischen Ansicht;
- Figur 5: eine rein schematische Darstellung eines weiteren Dämpferelements der Fahrzeugkomponente in einer Seitenansicht; und
- Figur 6: eine rein schematische Darstellung einer Dämpfereinrichtung der Fahrzeugkomponente.

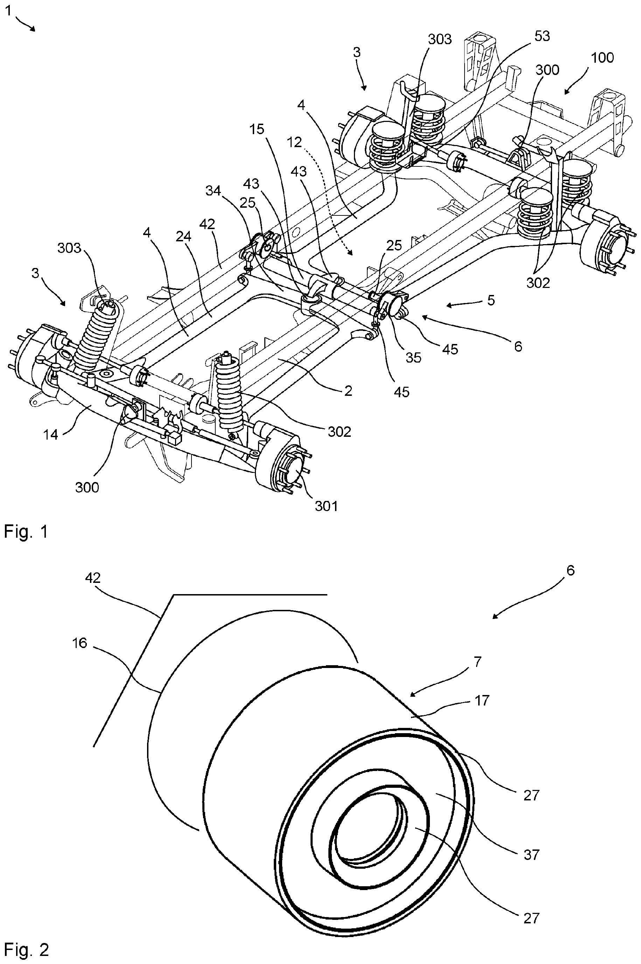

Die Figur 1 zeigt eine erfindungsgemäße Fahrzeugkomponente 1 für ein hier nur teilweise dargestelltes geländegängiges und beispielhaft als 4x4 ausgebildetes Nutzfahrzeug 100. Die Fahrzeugbaugruppe 1 umfasst ein Fahrgestell 2 und einen Triebstrang 12 mit einem Antriebsmotor und einer Getriebeeinrichtung. Zur besseren Übersichtlichkeit sind von der Getriebeeinrichtung nur die Halbwellen 53 und die Radvorgelege 301 gezeigt. Der Triebstrang 12 ist hier mit zwei Starrachseinheiten 3 ausgestattet, umfassend eine erste als Vorderachseinheit ausgebildete Achseinheit und eine als Hinterachseinheit ausgebildete zweite Achseinheit.

Zum Beispiel ist die Getriebeeinrichtung mit einem hier nicht dargestellten Hauptgetriebe ausgestattet, welches über eine Welle mit dem Antriebsmotor verbunden ist und an ein Verteilergetriebe angebunden ist. Das Verteilergetriebe ist z. B. direkt an ein Ausgleichsgetriebe der Hinterachseinheit gekoppelt. Dadurch ergibt sich eine sogenannte Transaxle-Bauweise. Dabei sind der Motor vorne und das Hauptgetriebe sowie das Verteilergetriebe an der angetriebenen Hinterachseinheit angeordnet. Zudem ist das Verteilergetriebe an ein Ausgleichsgetriebe der Vorderachseinheit gekoppelt. Die Ausgleichsgetriebe sind dann über Halbwellen 53 an die Räder bzw. deren Radvorgelege 301 gekoppelt.

Die Starrachseinheiten 3 sind hier mit jeweils einem Wattgestänge 300 ausgestattet. Es können auch andere geeignete Arten von Stabilisatoren vorgesehen sein. Zudem ist die Vorderachseinheit hier mit zu einem Federbein zusammengesetzten Federn 302 und Stoßdämpfern 303 ausgestattet. Die Hinterachseinheit ist hier mit vier Federn 302 und zwei Stoßdämpfern 303 ausgestattet.

Die Starrachseinheiten 3 umfassen hier jeweils einen Schubrohrrahmen 4, welcher eine zwischen den Rädern verlaufende Querachse 14 und zwei mit der Querachse 14 verbundene Schubrohre 24 umfasst. Die Schubrohre 24 eines Schubrohrrahmens 4 erstrecken sich hier längs in Richtung der Fahrzeugmitte und sind dort über ein Querrohr 34 verbunden.

In der hier gezeigten Ausführung ist vorgesehen, dass die Getriebeeinrichtung mit ihren drehmomentübertragenden Komponenten außerhalb des Schubrohrrahmens 4 angeordnet ist. Dabei sind die Ausgleichsgetriebe getrennt von den Querachsen 14 der Schubrohrrahmen 4 an dem Fahrgestell 2 befestigt. Die Starrachseinheiten 3 sind hier somit in der Bauweise einer De-Dion-Achse ausgeführt. Die zum Antrieb vorgesehenen Halbwellen 53 verlaufen ebenfalls außerhalb der Schubrohrrahmen 4.

Das Fahrgestell 2 bzw. Chassis ist hier als Leiterrahmen ausgebildet und umfasst einen rechten und einen linken Längsträger 42. Die Längsträger 42 sind hier an den Enden über entsprechende Querstreben miteinander verbunden. In einem zentralen Bereich sind die Längsträger 42 hier zudem mit einem zu einer Wankstabilisatoreinrichtung 5 gehörenden Querträger 15 verbunden. In der hier gezeigten Ausführung wird der Querträger 15 durch zwei parallele und beabstandete Querträgerelemente bereitgestellt. Der Leiterrahmen kann weitere hier nicht näher beschriebene Querstreben bzw. Versteifungen aufweisen.

Die Schubrohrrahmen 4 sind hier jeweils über ein Zentralgelenk 43 bewegbar an dem Fahrgestell 2 befestigt. Dabei sind die Zentralgelenke 43 an den Querrohren 34 und an dem Querträger 15 angebunden und beispielsweise als Kugelgelenke oder Kugelflächengelenke oder auch als Gummipuffer ausgeführt. Dadurch ist eine besonders große Verschränkung der Achseinheiten 3 bzw. der Räder möglich, sodass auch große Hindernisse gut überfahren werden können.

Um eine besonders gute Fahrstabilität und Geländegängigkeit zu erreichen, ist hier eine Wankstabilisatoreinrichtung 5 vorgesehen. Dadurch wird eine erhebliche Minderung von Wankbewegungen im Fahrbetrieb bzw. beim Überfahren von Hindernissen erreicht. Die Wankstabilisatoreinrichtung 5 umfasst hier zwei gegenüberliegende Waagbalken 35, welche über jeweils ein Waagbalkenlager 25 an einem Längsträger 42 drehbar gelagert sind.

An je einem Waagbalken 35 sind hier die Schubrohrrahmen 4 der Vorderachseinheit und der Hinterachseinheit angebunden. Dazu ist zwischen dem Waagbalken 35 und dem jeweiligen Schubrohrrahmen 4 eine Wankstabilisatorstrebe 45 angeordnet. Durch diese Anbindung an zwei gemeinsame Waagbalken 35 können die Schubrohrrahmen 4 zueinander in erheblichem Maß verschränkt werden, während ungünstigen Wankbewegungen entgegengewirkt wird.

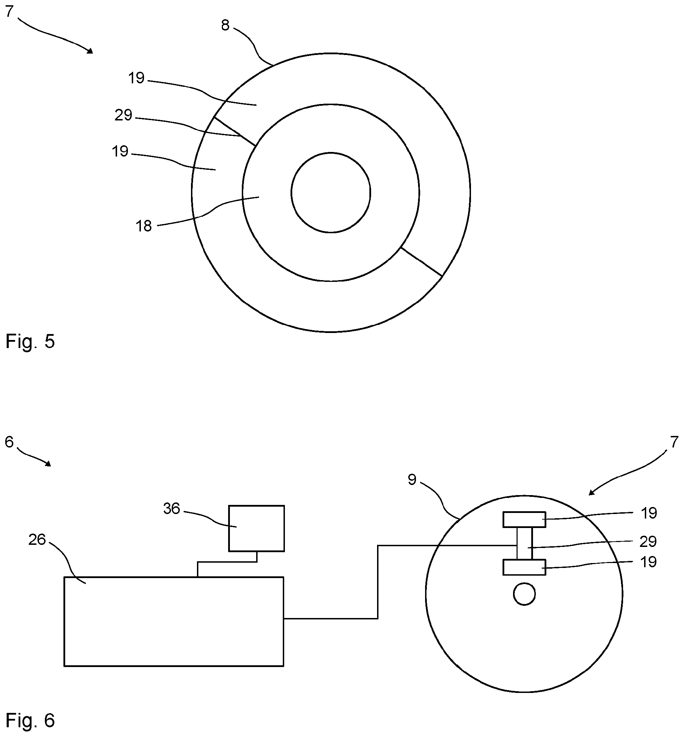

Um das Fahrzeug 100 gegenüber Wankbewegungen nicht nur zu stabilisieren, sondern die Wankbewegungen auch zu dämpfen, ist der Wankstabilisatoreinrichtung 5 eine Dämpfereinrichtung 6 zugeordnet. Die Dämpfereinrichtung 6 umfasst hier zwei Dämpferelemente 7, sodass jedes Waagbalkenlager 25 mit einem Dämpferelement 7 ausgestattet ist. Bei dem hier gezeigten Nutzfahrzeug 100 sind die Dämpferelemente 7 jeweils als steuerbarer Dämpfer 9 ausgebildet, wie er mit Bezug zu der Figur 6 näher beschrieben wird.

Um die Dämpfereinrichtung 6 optimal an die Einsatzbedingungen und beispielsweise die Ausstattung bzw. Beladung des Fahrzeugs 100 oder an das Gelände anzupassen, wird hier ein Dämpferparameter des steuerbaren Dämpfers 9 in Abhängigkeit einer mittels einer Sensoreinrichtung 36 erfassten Kenngröße eingestellt.

Zudem werden hier verschiedene Dämpferelemente 7 ausgewählt und eingebaut. Dazu sind die wahlweise einsetzbaren Dämpferelemente 7 so ausgebildet, dass sie in eine hier nicht näher dargestellte Aufnahmeeinrichtung 16 in den Längsträgern 42 bzw. im Waagbalkenlager 25 einsetzbar sind. Die Dämpferelemente 7 sind z. B. mit gleichen Abmessungen und gleichen Einbauvorrichtungen ausgestattet, um einen sicheren und unaufwendigen Austausch zu ermöglichen. So werden je nach Anforderung bestimmte Dämpferelemente 7 ausgewählt und dadurch ein oder mehrere Dämpferparameter angepasst werden.

In der Figur 2 ist ein als Dämpferbuchse 17 ausgebildetes Dämpferelement 7 gezeigt. Zudem sind in der Explosionsdarstellung auch der Längsträger 42 und die Aufnahmeeinrichtung 16 für das Dämpferelement 7 gezeigt. Die Dämpferbuchse 17 umfasst hier eine äußere Stützlage 27 und eine innere Stützlage 27, zwischen denen eine Elastomerlage 37 angeordnet ist. Beispielsweise wird der Waagbalken an der inneren Stützlage 27 angebunden. Mit der äußeren Stützlage 27 ist die Buchse 17 in die Aufnahmeeinrichtung 16 eingesetzt.

Die Dämpferbuchse 17 kann dazu vorgesehen sein, nur radial zur Drehachse des Waagbalkens 35 zu dämpfen. Für den rotativen Freiheitsgrad ist dann z. B. zwischen der inneren Stützlage 27 und einem am Schubrohrrahmen befestigten Zapfen ein Gleitlager oder Wälzlager angeordnet. Es kann auch zwischen dem Waagbalken 35 und der äußeren Stützlage 27 solches Lager vorgesehen sein. Möglich ist aber auch, dass die Rotationsfähigkeit bzw. die Lagerung durch die Dämpferbuchse 17 bereitgestellt wird.

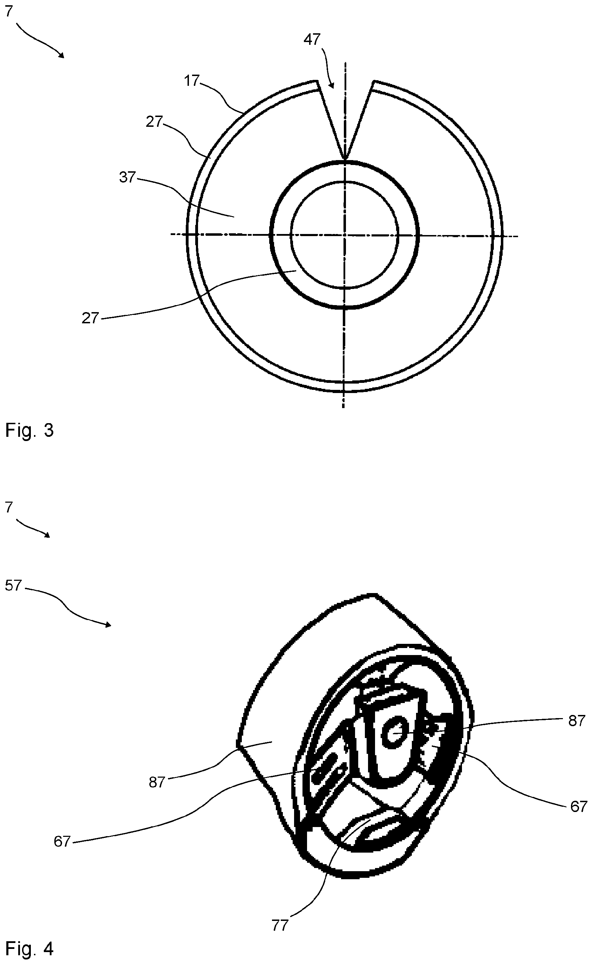

Je nach Anzahl von Elastomerlagen 37 und Stützlagen 27 oder je nach Zusammensetzung und beispielsweise Shorehärte der Elastomerlage 37 können unterschiedliche Dämpferparameter umgesetzt werden. Zur Anpassung der Dämpfungseigenschaften kann die hier gezeigte Buchse 17 durch andere in die Aufnahmeeinrichtung 16 einsetzbare Dämpferelemente 7 ausgetauscht werden, wie sie beispielsweise in den Figuren 3 bis 6 gezeigt sind.

Die Figur 3 zeigt ein wahlweise einsetzbares Dämpferelement 7, welches hier als eine Dämpferbuchse 17 bzw. Schlitzbuchse ausgebildet ist. Dazu ist beispielsweise ein Aufbau aus Stützlagen 27 und einer oder mehrerer Elastomerlagen 37 vorgesehen, wie er in der Figur 2 gezeigt ist. Dabei erstreckt sich hier ein Schlitz 47 durch die äußere Stützlage 27 und die Elastomerlage 37 und verjüngt sich nach radial innen. Die hier gezeigte Buchse 17 bietet beispielsweise eine härtere oder weichere Dämpfung des Waagbalkens 35. So können die Dämpfereigenschaften durch Einsetzen dieser Buchse 17 in die Aufnahmeeinrichtung 16 gezielt angepasst werden.

Die Figur 4 zeigt ein weiteres wahlweise einsetzbares Dämpferelement 7, welches hier als eine zweistufige Dämpferbuchse 57 ausgebildet ist. Dazu sind zwischen einem inneren und einem äußeren Tragkörper 87 zwei unterschiedliche harte Elastomere 67, 77 angeordnet. Der äußere Tragkörper 87 ist beispielsweise am Fahrgestell 2 und der innere Tragkörper 87 beispielsweise am Waagbalken 35 angebunden. Das hier gezeigte Dämpferelement 7 kann im Austausch mit den anderen hier gezeigten Dämpferelementen 7 in die Aufnahmeeinrichtung 16 eingesetzt werden. Die zweistufige Dämpferbuchse 57 dient hier als Drehdämpfer und ermöglicht vorzugsweise aber auch eine in radialer Richtung zur Drehachse des Waagbalkens wirkende Dämpfung.

Wenn sich der Waagbalken 35 durch eine Wankbewegung 100 dreht, wird dessen Drehbewegung zunächst in einem ersten Drehwinkelbereich durch das weichere Elastomer 67 gedämpft. Am Ende des ersten Drehwinkelbereichs stößt das weichere Elastomer 67 dann an das härtere Elastomer 77 an. Bei einer entsprechend stärkeren Wankbewegung wird die Buchse 57 dann über den ersten Drehwinkelbereich hinaus in einen zweiten Drehwinkelbereich bewegt. Dabei erfolgt im zweiten Drehwinkelbereich eine Dämpfung durch das härtere Elastomer 77. So wird eine gezielte Progression in der Dämpferkennlinie erreicht. Damit können beispielsweise kleinere Wankbewegungen besonders weich gedämpft werden, ohne dass es bei größeren Wankbewegungen zu einem Durchschlagen bzw. einer unzureichenden Dämpfung kommen würde.

In der Figur 5 ist ein wahlweise einsetzbares Dämpferelement 7 gezeigt, welches hier als eine hydraulisch gedämpfte Dämpferbuchse 8 ausgebildet ist. Dazu sind zwei über eine Ventileinrichtung 29 verbundene Dämpferkammern 19 vorgesehen. Durch eine Drehbewegung des Waagbalkens 35 strömt ein Dämpferfluid von der einen in die andere Dämpferkammer 19, wobei die Ventileinrichtung 29 den Durchfluss und somit die Dämpferkraft vorgibt. Die hydraulisch gedämpfte Dämpferbuchse 8 ist hier als ein Kombinationsdämpfer ausgebildet. Die Dämpferbuchse 8 kann aber auch als reiner Drehdämpfer ausgebildet sein.

Dabei kann die Ventileinrichtung 29 eine fest vorgegebene Durchflussrate oder auch eine einstellbare Durchflussrate aufweisen. Um eine Rückstellung der ausgelenkten Dämpferbuchse zu ermöglichen oder wenigstens zu unterstützen, ist hier eine Federeinrichtung 18 und beispielsweise ein Elastomer vorgesehen. Die hier gezeigte hydraulische Dämpferbuchse 8 kann im Austausch mit den anderen hier gezeigten Dämpferelementen 7 in die Aufnahmeeinrichtung 16 eingesetzt werden.

In der Figur 6 ist eine Dämpfereinrichtung 6 gezeigt, die einen mittels einer Steuereinrichtung 26 steuerbaren Dämpfer 9 aufweist. Der steuerbare Dämpfer 9 weist hier zwei Dämpferkammern 19 auf, welche über eine Ventileinrichtung 29 strömungsverbunden sind. Die Ventileinrichtung 29 kann durch die Steuereinrichtung 26 angesteuert werden, sodass z. B. verschiedene Dämpferkennlinien einstellbar sind. Möglich sind auch andere Bauarten von steuerbaren Dämpfern 9, mit denen ein oder mehrere Dämpferparameter mittels der Steuereinrichtung 26 angepasst werden können. Der steuerbare Dämpfer 9 ist hier als ein Kombinationsdämpfer ausgebildet. Der steuerbare Dämpfer 9 kann aber auch als reiner Drehdämpfer ausgebildet sein. Beispielsweise wird bei dem mit Bezug zu der Fig. beschriebenen Fahrgestell 2 jeder Waagbalken 35 mittels eines steuerbaren Dämpfers 6 gedämpft.

Die Steuereinrichtung 26 ist hier mit einer Sensoreinrichtung 36 wirkverbunden. Die Sensoreinrichtung 36 erfasst zum Beispiel eine charakteristische Kenngröße für ein Fahrmanöver und vorzugsweise einen Drehwinkel für jeden Waagbalken 35. Dazu ist hier für jeden Waagbalken 35 jeweils ein Drehwinkelsensor vorgesehen. Die von der Sensoreinrichtung 36 erfasste Kenngröße wird dann der Steuereinrichtung 26 bereitgestellt. Diese steuert in Abhängigkeit der Kenngröße die beiden Dämpfer 9 an, sodass je nach Auslenkung des zugehörigen Waagbalkens eine angepasste Dämpferkraft für jeden einzelnen Dämpfer 6 bereitgestellt wird. Der hier gezeigte steuerbare Dämpfer kann im Austausch mit den anderen hier gezeigten Dämpferelementen 7 in die Aufnahmeeinrichtung 16 eingesetzt werden.

Die hier gezeigten Dämpferelemente 7 werden beispielsweise aufgrund einer Ausstattung mit Anbaugeräten oder abhängig von einem Beladungszustand des Nutzfahrzeugs sowie unter Berücksichtigung eines zu durchfahrenden Geländeprofils ausgewählt und in die Aufnahmeeinrichtung 16 eingebaut. So werden unter verschiedensten Betriebsbedingungen eine optimale Dämpfung von Wankbewegungen und somit eine besonders hohe Wankstabilität erreicht.

**Bezugszeichenliste:**

| | | | |
|---|---|---|---|
| 1 | Fahrzeugkomponente | 27 | Stützlage |
| 2 | Fahrgestell | 29 | Ventileinrichtung |
| 3 | Starrachseinheit | 34 | Querrohr |
| 4 | Schubrohrrahmen | 35 | Waagbalken |
| 5 | Wankstabilisatoreinrichtung | 36 | Sensoreinrichtung |
| | | 37 | Elastomerlage |
| 6 | Dämpfereinrichtung | 42 | Längsträger |
| 7 | Dämpferelement | 43 | Kugelgelenk |
| 8 | Dämpferbuchse | 45 | Wankstabilisatorstrebe |
| 9 | Dämpfer | 47 | Schlitz |
| 12 | Triebstrang | 53 | Halbwelle |
| 14 | Querachse | 57 | Dämpferbuchse |
| 15 | Querträger | 67 | Elastomer |
| 16 | Aufnahmeeinrichtung | 77 | Elastomer |
| 17 | Dämpferbuchse | 87 | Tragkörper |
| 18 | Federeinrichtung | 100 | Nutzfahrzeug |
| 19 | Dämpferkammer | 300 | Wattgestänge |
| 24 | Schubrohr | 301 | Radvorgelege |
| 25 | Waagbalkenlager | 302 | Feder |
| 26 | Steuereinrichtung | 303 | Stoßdämpfer |

## Patentansprüche

1. Fahrzeugkomponente (1) für ein insbesondere geländegängiges Nutzfahrzeug (100), umfassend wenigstens ein Fahrgestell (2) und wenigstens einen an dem Fahrgestell (2) aufnehmbaren Triebstrang (12), wobei der Triebstrang (12) wenigstens zwei Starrachseinheiten (3) mit jeweils wenigstens einem Schubrohrrahmen (4) umfasst, wobei die Schubrohrrahmen (4) der wenigstens zwei Starrachseinheiten (3) mittels wenigstens einer am Fahrgestell (2) befestigten Wankstabilisatoreinrichtung (5) gelenkartig miteinander verbunden sind und wobei der Wankstabilisatoreinrichtung (5) wenigstens eine Dämpfereinrichtung (6) mit wenigstens einem Dämpferelement (7) zur Dämpfung einer Wankbewegung des Fahrzeugs (100) zugeordnet ist,
**dadurch gekennzeichnet,**
**dass** das Dämpferelement (7) wenigstens einen steuerbaren Dämpfer (9) umfasst und dass die Dämpfereinrichtung (6) wenigstens eine Steuereinrichtung (26) umfasst, welche dazu geeignet und ausgebildet ist, wenigstens einen Dämpferparameter des steuerbaren Dämpfers (9) in Abhängigkeit wenigstens einer Kenngröße einzustellen
und umfassend wenigstens zwei wahlweise in wenigstens eine Aufnahmeeinrichtung (16) der Dämpfereinrichtung (6) einsetzbare und sich in wenigstens einer Dämpfungseigenschaft unterscheidende Dämpferelemente (7), sodass wenigstens ein Dämpferparameter der Dämpfereinrichtung (6) durch die Wahl des Dämpferelements (7) einstellbar ist.

2. Fahrzeugkomponente (1) nach dem vorhergehenden Anspruch, wobei die Kenngröße sensorisch erfassbar und/oder hinterlegt ist.

3. Fahrzeugkomponente (1) nach einem der vorhergehenden Ansprüche, wobei das Dämpferelement (7) wenigstens teilweise an die Wankstabilisatoreinrichtung (5) gekoppelt ist, sodass wenigstens eine durch eine Wankbewegung des Fahrzeugs (100) bedingte Bewegung wenigstens eines Teils der Wankstabilisatoreinrichtung (5) mittels des Dämpferelements (7) dämpfbar ist.

4. Fahrzeugkomponente (1) nach einem der vorhergehenden Ansprüche, wobei die Wankstabilisatoreinrichtung (5) wenigstens einen Waagbalken (35) umfasst, welcher mit den Schubrohrrahmen (4) gekoppelt ist und über wenigstens ein Waagbalkenlager (25) drehbar an dem Fahrgestell (2) angebunden ist und wobei das Dämpferelement (7) an den wenigstens einen Waagbalken (35) gekoppelt ist, sodass wenigstens eine Drehbewegung des Waagbalkens (35) mittels des Dämpferelements (7) dämpfbar ist.

5. Fahrzeugkomponente (1) nach einem der vorhergehenden Ansprüche, wobei die Kenngröße eine Betriebsstellung der Wankstabilisatoreinrichtung (5) relativ zu dem Fahrgestell (2) und/oder relativ zu wenigstens einem der Schubrohrrahmen (4) definiert.

6. Fahrzeugkomponente (1) nach einem der vorhergehenden Ansprüche, wobei die wahlweise einsetzbaren Dämpferelemente (7) in ein Waagbalkenlager (25) der Wankstabilisatoreinrichtung (5) integriert sind.

7. Fahrzeugkomponente (1) nach einem der vorhergehenden Ansprüche, wobei sich die wahlweise einsetzbaren Dämpferelemente (7) wenigstens in ihrer Elastizität und/oder Rückstellkraft und/oder Progression und/oder in ihrem Dämpfungsgrad unterscheiden.

8. Fahrzeugkomponente (1) nach einem der vorhergehenden Ansprüche, wobei sich die wahlweise einsetzbaren Dämpferelemente (7) wenigstens in einer Eigenschaft wenigstens eines Elastomerbauteils unterscheiden und wobei die Eigenschaft eine Shorehärte und/oder eine Zusammensetzung und/oder eine Masse des Elastomerbauteils betrifft.

9. Fahrzeugkomponente (1) nach einem der vorhergehenden Ansprüche, wobei sich die wahlweise einsetzbaren Dämpferelemente (7) wenigstens in ihrer Dämpferbauart unterscheiden.

10. Fahrzeugkomponente (1) nach einem der vorhergehenden Ansprüche, wobei wenigstens eines der Dämpferelemente (7) wenigstens eine Dämpferbuchse (17) mit wenigstens einer konzentrisch zwischen wenigstens zwei Stützlagen (27) angeordneten Elastomerlage (37) umfasst und insbesondere wobei wenigstens eine äußere Stützlage (27) und/oder die Elastomerlage (37) wenigstens teilweise geschlitzt sind.

11. Fahrzeugkomponente (1) nach dem vorhergehenden Anspruch, wobei die wahlweise einsetzbaren Dämpferelemente (7) wenigstens zwei sich in wenigstens einer Dämpfungseigenschaft unterscheidende Dämpferbuchsen (17) umfassen.

12. Fahrzeugkomponente (1) nach einem der vorhergehenden Ansprüche, wobei wenigstens eines der Dämpferelemente (7) wenigstens eine wenigstens zweistufige Dämpferbuchse (57) umfasst, welche in wenigstens einem ersten Drehwinkelbereich mittels wenigstens eines weicheren Elastomers (67) gedämpft wird und in wenigstens einem auf den ersten Drehwinkelbereich folgenden zweiten Drehwinkelbereich wenigstens mittels wenigstens eines härteren Elastomers (77) gedämpft wird.

13. Fahrzeugkomponente (1) nach dem vorhergehenden Anspruch, wobei die wahlweise einsetzbaren Dämpferelemente (7) wenigstens zwei sich in wenigstens einer Dämpfungseigenschaft unterscheidende wenigstens zweistufige Dämpferbuchsen (57) umfassen.

14. Fahrzeugkomponente (1) nach einem der vorhergehenden Ansprüche, wobei wenigstens eines der Dämpferelemente (7) wenigstens eine hydraulisch gedämpfte Dämpferbuchse (8) umfasst, welche vorzugsweise mittels wenigstens einer Federeinrichtung (18), insbesondere wenigstens eines Elastomers, rückstellbar ist.

15. Fahrzeugkomponente (1) nach dem vorhergehenden Anspruch, wobei die wahlweise einsetzbaren Dämpferelemente (7) wenigstens zwei sich in wenigstens einer Dämpfungseigenschaft unterscheidende hydraulisch gedämpfte Dämpferbuchsen (8) umfassen.

## Claims

1. Vehicle component (1) in particular for an off-road utility vehicle (100), comprising at least one chassis (2) and at least one drive train (12) that can be accommodated on the chassis (2), the drive train (12) comprising at least two fixed axle units (3) having at least one torque tube frame (4) each, wherein the torque tube frames (4) of the at least two fixed axle units (3) are pivotally interlinked by means of at least one antiroll bar device (5) attached to the chassis (2), and wherein at least one damper device (6) comprising at least one damper component (7) is assigned to the antiroll bar device (5) for damping a rolling motion of the vehicle (100),
**characterized in**
**that** the damper component (7) comprises at least one controllable damper (9), and that the damper device (6) comprises at least one control device (26), which is suitable and configured to set at least one damper parameter of the controllable damper. (9) in dependence on at least one characteristic quantity,
and comprising at least two damper components (7) optionally insertable in at least one takeup device (16) of the damper device (6) and differing in at least one damping characteristic, so that at least one damper parameter of the damper device (6) can be set and adjusted by selecting the damper component (7).

2. The vehicle component (1) according to the preceding claim, wherein the characteristic quantity can be obtained by sensor and/or is stored.

3. The vehicle component (1) according to any of the preceding claims, wherein the damper component (7) is at least partially coupled with the antiroll bar device (5), so that at least one motion of at least part of the antiroll bar device (5) resulting from a rolling motion of the vehicle (100) can be dampened by means of the damper component (7).

4. The vehicle component (1) according to any of the preceding claims, wherein the.antiroll bar device (5) comprises at least one balance beam (35), which is coupled with the torque tube frames (4) and is rotatably linked to the chassis (2) by at least one balance beam bearing (25), and wherein the damper component (7) is coupled with the at least one balance beam (35), so that at least one rotary motion of the balance beam (35) can be dampened by means of the damper component (7).

5. The vehicle component (1) according to any of the preceding claims, wherein the characteristic quantity defines an operating position of the antiroll bar device (5) relative to the chassis (2) and/or relative to at least one of the torque tube frames (4).

6. The vehicle component (1) according to any of the preceding claims, wherein the optionally insertable damper components (7) are incorporated in a balance beam bearing (25) of the antiroll bar device (5).

7. The vehicle component (1) according to any of the preceding claims, wherein the optionally insertable damper components (7) differ at least in their elasticity and/or restoring force and/or progression and/or in their damping ratio.

8. The vehicle component (1) according to any of the preceding claims, wherein the optionally insertable damper components (7) differ at least in one property of at least one elastomer part, and wherein the property relates to the Shore hardness and/or the composition and/or the mass of the elastomer part.

9. The vehicle component (1) according to any of the preceding claims, wherein the optionally insertable damper components (7) differ at least by their damper type.

10. The vehicle component (1) according to any of the preceding claims, wherein at least one of the damper components (7) comprises at least one damper bushing (17) with at least one elastomer layer (37) disposed concentrically between at least two backing layers (27), and in particular wherein at least one outer backing layer (27) and/or the elastomer layer (37) are at least partially slotted.

11. The vehicle component (1) according to the preceding claim, wherein the optionally insertable damper components (7) comprise at least two damper bushings (17) differing in at least one damping characteristic.

12. The vehicle component (1) according to any of the preceding claims, wherein at least one of the damper components (7) comprises at least one at least two-stage damper bushing (57), which is dampened in at least one first rotation angle range by means of at least one soft elastomer (67), and in at least one second rotation angle range following the first rotation angle range at least by means of at least one hard elastomer (77).

13. The vehicle component (1) according to the preceding claim, wherein the optionally insertable damper components (7) comprise at least two damper bushings (57) differing in at least one damping characteristic and having at least two stages.

14. The vehicle component (1) according to any of the preceding claims, wherein at least one of the damper components (7) comprises at least one hydraulically dampened damper bushing (8), which is preferably restorable by means of at least one spring device (18), in particular at least one elastomer.

15. The vehicle component (1) according to the preceding claim, wherein the optionally insertable damper components (7) comprise at least two hydraulically dampened damper bushings (8) differing in at least one damping characteristic.

## Revendications

1. Composant de véhicule (1) pour un véhicule utilitaire (100) en particulier tout-terrain, comprenant au moins un châssis (2) et au moins un groupe motopropulseur (12) qui peut être logé sur le châssis (2), dans lequel ledit groupe motopropulseur (12) comprend au moins deux unités d'essieu rigides (3) ayant chacune au moins un cadre de tube de poussée (4), dans lequel les cadres de tube de poussée (4) desdites au moins deux unités d'essieu rigides (3) sont reliés l'un à l'autre de manière articulée au moyen d'au moins un dispositif stabilisateur de roulis (5) fixé au châssis (2), et dans lequel audit dispositif stabilisateur de roulis (5) est associé au moins un dispositif amortisseur (6) avec au moins un élément amortisseur (7) pour amortir un mouvement de roulis du véhicule (100),
**caractérisé par le fait**
**que** l'élément amortisseur (7) comprend au moins un amortisseur commandable (9) et que le dispositif amortisseur (6) comprend au moins un dispositif de commande (26) qui est approprié et conçu pour régler au moins un paramètre d'amortisseur de l'amortisseur commandable (9) en fonction d'au moins un paramètre
et comprenant au moins deux éléments amortisseurs (7) qui peuvent être insérés au choix dans au moins un dispositif de réception (16) du dispositif amortisseur (6) et qui diffèrent par au moins une propriété d'amortissement, de sorte qu'au moins un paramètre d'amortisseur du dispositif amortisseur (6) peut être réglé en sélectionnant l'élément amortisseur (7).

2. Composant de véhicule (1) selon la revendication précédente, dans lequel le paramètre peut être détecté par capteur et/ou est stocké.

3. Composant de véhicule (1) selon l'une quelconque des revendications précédentes, dans lequel l'élément amortisseur (7) est au moins partiellement couplé au dispositif stabilisateur de roulis (5) de sorte qu'au moins un mouvement d'au moins une partie du dispositif stabilisateur de roulis (5), qui est provoqué par un mouvement de roulis du véhicule (100), peut être amorti au moyen de l'élément amortisseur (7).

4. Composant de véhicule (1) selon l'une quelconque des revendications précédentes, dans lequel le dispositif stabilisateur de roulis (5) comprend au moins un balancier (35) qui est couplé au cadre de tube de poussée (4) et est relié à rotation sur le châssis ( 2) par l'intermédiaire d'au moins un palier de balancier (25) et dans lequel l'élément amortisseur (7) est couplé audit au moins un balancier (35) de sorte qu'au moins un mouvement de rotation du balancier (35) peut être amorti au moyen de l'élément amortisseur (7).

5. Composant de véhicule (1) selon l'une quelconque des revendications précédentes, dans lequel le paramètre définit une position de fonctionnement du dispositif stabilisateur de roulis (5) par rapport au châssis (2) et/ou par rapport à au moins un des cadres de tube de poussée (4).

6. Composant de véhicule (1) selon l'une quelconque des revendications précédentes, dans lequel les éléments amortisseurs (7) utilisables au choix sont intégrés à un palier de balancier (25) du dispositif stabilisateur de roulis (5).

7. Composant de véhicule (1) selon l'une quelconque des revendications précédentes, dans lequel les éléments amortisseurs (7) utilisables au choix diffèrent au moins par leur élasticité et/ou leur force de rappel et/ou leur progression et/ou par leur degré d'amortissement.

8. Composant de véhicule (1) selon l'une quelconque des revendications précédentes, dans lequel les éléments amortisseurs (7) utilisables au choix diffèrent par au moins une propriété d'au moins un composant en élastomère et dans lequel la propriété concerne une dureté Shore et/ou une composition et/ou une masse du composant en élastomère.

9. Composant de véhicule (1) selon l'une quelconque des revendications précédentes, dans lequel les éléments amortisseurs (7) utilisables au choix diffèrent au moins par leur conception d'amortisseur.

10. Composant de véhicule (1) selon l'une quelconque des revendications précédentes, dans lequel au moins un des éléments amortisseurs (7) comprend au moins une douille d'amortisseur (17) avec au moins une couche d'élastomère (37) disposée concentriquement entre au moins deux couches de support (27) et en particulier dans lequel au moins une couche de support externe (27) et/ou la couche d'élastomère (37) sont au moins en partie fendues.

11. Composant de véhicule (1) selon la revendication précédente, dans lequel les éléments amortisseurs (7) utilisables au choix comprennent au moins deux douilles d'amortisseur (17) qui diffèrent par au moins une propriété d'amortissement.

12. Composant de véhicule (1) selon l'une quelconque des revendications précédentes, dans lequel au moins un des éléments amortisseurs (7) comprend au moins une douille d'amortisseur (57) à au moins deux étages qui est amortie dans au moins une première plage d'angles de rotation au moyen d'au moins un élastomère plus souple (67) et est amortie dans au moins une deuxième plage d'angles de rotation qui suit la première plage d'angles de rotation, au moyen d'au moins un élastomère plus dur (77).

13. Composant de véhicule (1) selon la revendication précédente, dans lequel les éléments amortisseurs (7) utilisables au choix comprennent au moins deux douilles d'amortisseur (57) à au moins deux étages qui diffèrent par au moins une propriété d'amortissement.

14. Composant de véhicule (1) selon l'une quelconque des revendications précédentes, dans lequel au moins un des éléments amortisseurs (7) comprend au moins une douille d'amortisseur (8) à amortissement hydraulique qui peut être rappellée de préférence au moyen d'au moins un dispositif à ressort (18), en particulier d'au moins un élastomère.

15. Composant de véhicule (1) selon la revendication précédente, dans lequel les éléments amortisseurs (7) utilisables au choix comprennent au moins deux douilles d'amortisseur (8) à amortissement hydraulique qui diffèrent par au moins une propriété d'amortissement.
